# EUROPEAN PATENT SPECIFICATION

(11) **EP 0 943 734 B1**
(45) Date of publication and mention of the grant of the patent: **14.04.2004**
(21) Application number: 98115033.7
(22) Date of filing: 11.08.1998
(51) Int. Cl.: E01C 19/48, G01G 19/08

(54) **Finishing machine with a weighing device for the asphalt**
Strassendeckenfertiger mit Asphaltwiegevorrichtung
Finisseuse de route avec dispositif de pesage pour asphalte

(30) Priority: 20.03.1998 IT VI980057
(43) Date of publication of application: 22.09.1999
(73) Proprietor: BITELLI S.p.A., 40061 Minerbio (BO) (IT)
(72) Inventor: Bitelli, Romolo, S. Lazzaro - Bologna (IT)
(74) Representative: Wagner, Karl H., Dipl.-Ing.

(56) References cited:
- EP-A- 0 442 593
- US-A- 4 012 160
- US-A- 4 332 505

## Description

The present patent regards a finishing machine supplied with a weighing device for the asphalt distributed by it.

As it is known finishing machines or vibratory finishing machines are machines that lay a layer of the new asphalt surface after the carriageway has been prepared and/or after the old asphalt has been removed by scarifier machines.

Finishing or vibratory finishing machines as known in the art and as disclosed for example in US-A-4332505 generally have a hopper for the storage and the distribution of the asphalt conglomerate. Such machines also have one or two conveyors which transport the asphalt from the bottom of the hopper on the back of the machine. The finishing machine also has one or two augers which distribute the asphalt received from the conveyor. A shearing and compacting device with vibratory elements for compressing of the laid asphalt surface is also part of the finishing machine.

The thickness of the asphalt replaced on the carriageway and therefore the amount of the asphalt itself is a function of the speed of the machine and of the capacity of the conveyors to distribute the asphalt to the augers. Since the excellence of the asphalting depends, besides on the quality of the conglomerate which is used, also on the thickness of the laid asphalt, it is very important to know the thickness which is actually deposited by the finishing machine.

The present methods currently known in the art determine only the thickness of the asphalt by the coring, which is made by sampling of some points at random. With this system, it is possible to obtain only partial information with regard to the executed work. The measure of the thickness of the asphalt is a measure of the destructive kind which means that the coring causes some holes in the road surface. After the coring, the holes should be covered again. Besides the need of giving or receiving a certification of the asphalting work which as been executed, the cost of the asphalting works is also a consideration.

The purpose of the present invention is that of overcoming the limits before mentioned.

One of the purposes of the finishing machine of the invention is for arranging a weighing device in order to determine the weight of the material distributed by the machine during the work.

Another purpose is to determine the weight of the material distributed in a certain area and/or along a certain stretch of road.

Another purpose is to certify the amount of asphalt distributed from the machine itself along a certain route.

Yet another purpose which should been obtained is for the machine to give accurate and reliable information, and that this information is independent from the working conditions of the machine itself.

All the stated purposes and other ones which will become apparent hereinafter, are achieved by a finishing machine for the laying of asphalt surfaces according to claim 1 and comprising a hopper for the storage and the distribution of the material; at least a conveyor for conveying the material from the hopper; at least one auger for the distribution of the material; and at least a shearing device for the compressing of the asphalt. The conveyor comprises a couple of chains moved by pulleys and connected with one another by transversal splines suitable for the transport of the material taken from the bottom of the hopper. The conveyor is supported on a plurality of fixed plates anchored to the frame of the machine. The couple of chains run on the plates of the machine. The last plate which supports the passing materials before the transfer onto the distribution auger is made to swing in comparison with the fixed plate which precedes it, and the last plate leans on a weighing device. The weighing device is connected with a control power unit or control unit which detects the reading of the weight at time intervals which are a function of the angular speed of the pulley of the conveyor. The control unit allows a subsequent weighing to take place after all the material weighed in a preceding weighing has been unloaded from the weighing plate.

Advantageously, according to the invention, the last one of the plates which supports the passing material from the hopper to the distribution augers is made to swing by a hinge. The hinge is arranged on an edge of the plate, and the plate is supported by a weighing device, such as loading cells.

The weighing is executed at time intervals which are a function of the speed of the pulley and of the angle over which it moves. Each weighing can take place every time that the pulley has carried away a length of a chain similar to the length of the weighing plate. In this way, the certainty of always weighing new material is achieved.

The control unit records the weight as a function of the speed of the conveyor of the material and receives also the information relevant to the advancing speed of the machine. As such, it is possible to elaborate the information relevant to the laying of the asphalt according to a certain route of the machine. Also, the machine is equipped with sensors which give information of the width of the front of laying of the asphalt. It is clear that the information relevant to the weight of the asphalt in following areas and therefore the information relevant to the thickness of laid asphalt can be obtained.

Further characteristics and peculiarities of the invention will be pointed out in the following description of a preferred embodiment of the invention given as an example but not as a restriction and represented in the enclosed drawings wherein:
- Fig. 1: is a side view of the finishing machine;
- Fig. 1a: shows the finishing machine of Fig. 1 in a front view;
- Fig. 2: shows in a schematic form the conveyor which connects the front hopper to the distribution augers;
- Fig. 3: is an enlarged side view of a detail of the Fig. 2 relevant to the weighing plate;
- Fig. 4: is an enlarged perspective view of the covering gasket in between the weighing plate and the plate which precedes it.

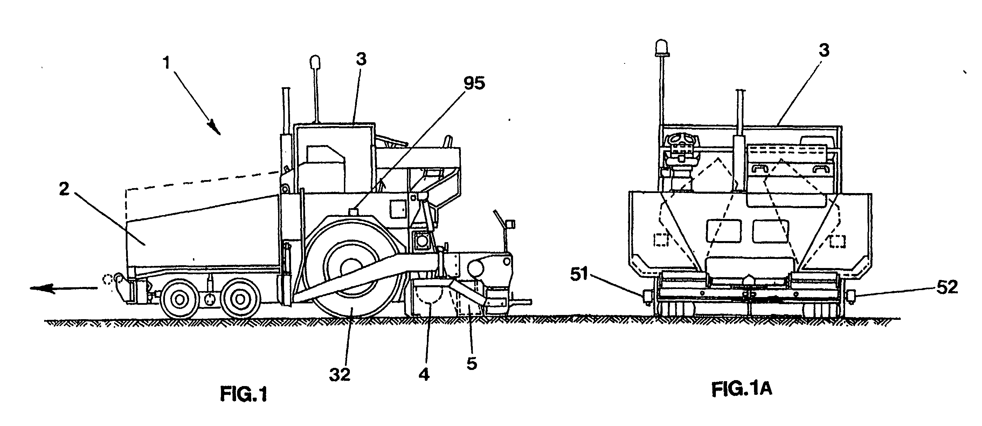

Referring to the mentioned drawings it can be observed that the finishing machine represented in Fig. 1 and indicated as a whole with 1 has a hopper 2 for the storage of asphalt arranged in front of a cab or operator's stand 3 of the machine. In the rear, as shown in a schematic representation, the distribution auger 4 of the asphalt and the shearing device 5 can be observed.

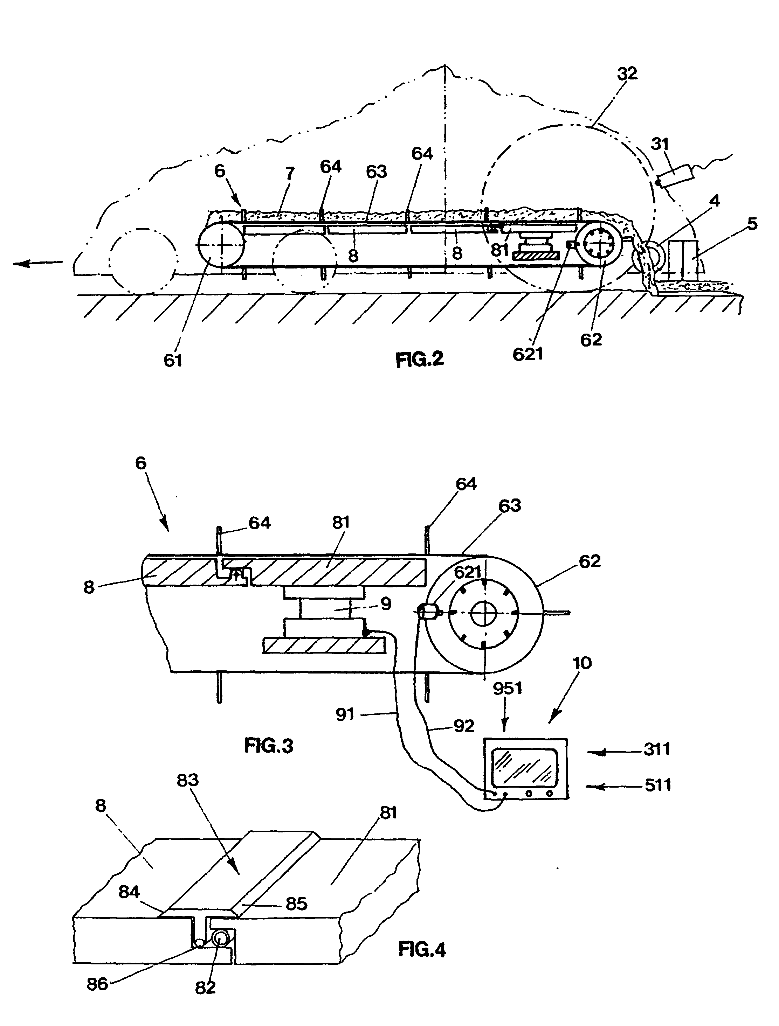

On the bottom of the hopper 2 is a conveyor 6. This conveyor 6 transports the conglomerate asphalt 7 from the hopper 2 to the distribution augers 4. As Figs. 2 and 3 show, the conveyor 6 is extended in between two pulleys 61 and 62 on which two guide chains 63 are distributed. Only one of these chains can be observed in Fig. 2. In between the chains 63, a plurality of transversal splines 64 is present and they are useful for carrying away the conglomerate of asphalt 7 from the hopper 2 to the distribution auger 4. The transversal splines 64 crawl on a plurality of plates 8.

The plates 8 are fixed to the frame of the machine and provide the base on which the passing material is supported when moving from the hopper 2 to the distribution augers 4. As is shown in Fig. 2 and in more detail in Fig. 3, the last supporting plate or weighing plate 81 is not anchored to the frame of the machine but it is rests on a loading cell 9. The plate 81 is hinged on the edge by a hinge 82. It is clear that when the material passes on the weighing plate 81, the weight of the material will cause the weighing plate 81 to incline towards the bottom, being hinged in 82 and loading the loading cell 9. From the loading cell 9 exits a signal 91 which is received by the control unit 10. A further signal 92 is received from the rotation sensor 621 which monitors the rotation angle of the pulley 62 and its speed. When the rotation angle of the pulley 62 is such that the linear route of the conveyor is the same as the length of the plate 81, it is clear that all the material of the first weighing has been unloaded and another weighing can be executed, with new material now being disposed on the plate 81.

It is clear that the greater the speed of the pulley 62, the greater is the quantity of material which passes over the plate 81. Such material is distributed from the augers 4 and forms the asphalt surface under the shearing device 5.

Also, the information from the sensor 31 which controls the advancing speed of the wheel 32 of the finishing machine 1 is sent to the control unit 10. A program is used with the control unit 10 to give the weight of the asphalt laid along a stretch of road, relating the measured weight during a certain time to the road covered by the finishing machine.

Sensors 51 and 52 may be placed near the shearing device 5 for monitoring the width of the asphalt surface laid by the shearing device 5. The sensors 51 and 52 send a signal 511 to the control unit 10, making it easy to obtain the information relevant to the weight of the asphalt for a surface unit of a certain stretch of road.

Similarly, with regard to compressing of the material an indication of the thickness of the material for every stretch of road can be given by the control unit 10. All the information which, opportunely organized, can give a certification of the thickness or the quantity of weight of the material laid by the machine along all the route, provided the length variations of the covered surface are sent to the control unit 10.

Since the machine 1 can work in conditions both on plane and inclined surfaces, for example on slopes or descents, it is clear that in such case the registered weight by the loading cell 9 is not accurate. For this case, the machine of the invention preferably includes an inclination sensor 95, anchored to the frame of the machine and illustrated in Fig. 1.

The inclination sensor 95 emits a signal 951 to the control unit 10 which corrects the weighing of the loading cell with regard to the correction factor resulting from the inclination of the machine and therefore considers the gravitational component.

At last, it can be observed that because of the asphalt conglomerate which passes on the conveyor is heated, it is easy for the asphalt to penetrate in between support plates under the conveyor. Because of this, it is important that the weighing plate 81 is protected from possible infiltrations of material.

Such protection of the weighing plate 81 is accomplished by the application of a gasket 83 which has a T shape and which has two wings 84 and 85. Each wing 84 and 85 is beveled in order to guarantee the perfect adherence to the plane of each plate 8 and 81. The beveled shape prevents the passing material from penetrating under the gasket itself. The central part 86 of the gasket is inserted between two vertical walls of the plates 8 and 81 in order to protect the hinge 82. The hinge 82 should remain free in order to guarantee that the weighing plate 81 can freely incline in relation to the weight which passes over it.

According to what has been described, it is an advantage of the invention that it allows to determine the weight of the material distributed by the finishing machine during a specified time and in a specified space. It has also been illustrated that the distribution of the asphalt surface for each square metre of the route covered by the finishing machine can be determined.

## Claims

1. Finishing machine (1) for carrying asphalt material and for laying asphalt surfaces on the ground therefrom, comprising:
- a frame;
- a hopper (2), secured to the frame, for storage and distribution of the material;
- a conveyor (6), secured to the frame, for conveying the material from the hopper;
- a distribution auger (4) located at an output end of the conveyor for receiving the material from the conveyor output and depositing the material on the ground; and
- a shearing device (5) located adjacent to the auger for compressing of the deposited material against the ground,
said conveyor (6) comprising
a pair of endless chains (63);
pulleys (61, 62) carrying the chains;
transversal splines (64) connecting the chains for transporting the material (7) from the hopper; and
a plurality of fixed plates (8) anchored to the frame between the chains for supporting the material thereon,
**characterised in that** the machine comprises:
a weighing plate (81) supporting the conveyed material before it is transferred on the distribution auger, said weighing plate (81) being floating with respect to a preceding fixed plate (8) and being supported on a weighing device (9) for providing a weight signal (91) indicative of the weight of the material thereon; and
a control unit (10) being responsive to the weight signal (91) for producing an indication of the amount of material deposited on the ground at time intervals which are a function of the angular speed (92) of the pulleys (62) of the conveyor, such that successive weighings can take place after all the previously weighed material has been unloaded from the weighing plate (81).

2. Finishing machine according to the claim 1, further comprising a speed sensor (31) for sensing the translation speed of the finishing machine, and said control unit (10) being responsive to a speed signal (311) such that the resulting information is the weight of the asphalt distributed by the machine along a stretch of covered road.

3. Finishing machine according to the claim 2, further comprising a width detector (51, 52) for sensing the width of the asphalt layer distributed by the shearing device (5) and providing a width signal (511), said control unit (10) being responsive to said width signal (511) such that the resulting information is the weight of the asphalt distributed in an area of a predetermined stretch of road.

4. Finishing machine according to any one of the previous claims, further comprising an inclination detector (95) for sensing an inclination of said machine in comparison with the vertical and for producing an inclination signal (951), said control unit (10) being responsive to said inclination signal (951) for correcting the weight detected when the finishing machine works on non-planar road routes.

5. Finishing machine according to the claim 1 wherein the weighing device (9) comprises a loading cell.

6. Finishing machine according to the claim 1, further comprising a gasket (83) located between the trailing edge of said weighing plate (81) and the leading edge of the adjacent fixed plate (8), said gasket being substantially T shaped with two wings (84, 85) opposed to one another and a centrally located depending part, said wings being bevelled and disposed on the surface of said weighing plate (81) and said adjacent fixed plate (8), respectively, and the central depending part (6) thereof being inserted in the substantially vertical wall in between the weighing plate (81) and said adjacent fixed plate (8).

7. Method for controlling a finishing machine for carrying asphalt material and for laying asphalt surfaces on the ground therefrom, said machine comprising a hopper (2) for storage and distribution of the material, a conveyor (6) for conveying the material from the hopper (2), a distribution auger (4) receiving the material from the conveyor and depositing the material on the ground, a shearing device (5) located adjacent to the auger for compressing of the deposited material against the ground, and a control unit (10);
said conveyor (6) comprising a pulley (62) to drive a chain (63) of said conveyor, said chain (63) being connected to transversal splines (64) adapted to transport the material, and a weighing plate (81),
said method comprises the steps of:
sensing the speed of the pulley (62) and providing a signal indicative thereof to the control unit (10);
determining time intervals which are a function of the speed of the pulley (62) such that during each time interval the pulley (62) has carried away a length of a chain (63) similar to the length of the weighing plate (81); and
weighing the material on the weighing plate (81) in said time intervals under control of said control unit (10) in order to determine the weight of the material distributed by the machine during work.

8. Method according to claim 7, further comprising the steps of:
recording the weight as a function of the speed of the conveyor of the material, providing information relevant to the advancing speed of the machine, and elaborating the information relevant to the laying of the asphalt according to a certain route of the machine.

9. Method according to claim 8, further comprising the steps of:
providing information of the width of the front of laying of the asphalt, and providing information relevant to the thickness of laid asphalt deposited in a predetermined area.

10. Method according to any of claims 7 to 9, further comprising the steps of:
sensing an inclination of said machine in comparison with the vertical,
producing an inclination signal (951), and correcting the weight detected according to the inclination signal (951) when the finishing machine works on non-planar road routes.

## Patentansprüche

1. Straßendeckenfertigungsmaschine (1) zum Tragen von Asphaltmaterial und zum Fertigen von Asphaltoberflächen auf dem Untergrund, mit:
- einem Rahmen;
- einem am Rahmen befestigten Schüttgutbehälter (2) zur Speicherung und Verteilung des Materials;
- einer am Rahmen befestigten Fördereinrichtung (6) zum Befördern des Materials aus dem Schüttgutbehälter;
- einem Verteilungsschneckenförderer (4), der an einem Ausgabeende der Fördereinrichtung angeordnet ist zur Aufnahme des Materials von der Ausgabe der Fördereinrichtung und zum Ablagern des Materials auf dem Untergrund;
- einer Schereinrichtung (5), die benachbart zu dem Schneckenförderer angeordnet ist zum Komprimieren des auf dem Untergrund abgelagerten Materials,
wobei die Fördereinrichtung (6) folgendes aufweist:
ein Paar endloser Ketten (63);
Rollen bzw. Scheiben (61, 62), welche die Ketten tragen;
Querrippen (64), die die Ketten verbinden zum Transportieren des Materials (7) aus dem Schüttgutbehälter; und
eine Vielzahl fester Platten (8), die an dem Rahmen zwischen den Ketten verankert sind, zum Tragen des Materials darauf,
**dadurch gekennzeichnet, dass** die Maschine folgendes aufweist:
eine Wiegeplatte (81), die das beförderte Material trägt, bevor es auf den Verteilungsschneckenförderer übertragen wird, wobei die Wiegeplatte (81) bezüglich einer vorhergehenden festen Platte (8) schwebt und auf einer Wiege-Einrichtung (9) zum Vorsehen eines Wiegesignals (91) als Anzeige für das Gewicht des Materials darauf getragen wird; und
eine Steuereinheit (10), die ansprechend auf das Wiegesignal (91) ist, zum Erzeugen einer Anzeige für die auf dem Untergrund abgelagerte Materialmenge in Zeitintervallen, die eine Funktion der Winkel- bzw. Drehgeschwindigkeit (92) der Rollen bzw. Scheiben (62) der Fördereinrichtung sind, so dass nachfolgende Wiegevorgänge vorgenommen werden können, nachdem das gesamte vorher gewogene Material von der Wiegeplatte (81) abgeladen wurde.

2. Straßendeckenfertigungsmaschine gemäß Anspruch 1, die ferner einen Geschwindigkeitssensor (31) aufweist zum Abfühlen der Fahrgeschwindigkeit der Straßendeckenfertigungsmaschine, und wobei die Steuereinheit (10) ansprechend auf ein Geschwindigkeitssignal (311) ist, so dass die sich ergebende Information das Gewicht des von der Maschine über einen Abschnitt der Fahrbahndecke verteilten Asphalts ist.

3. Straßendeckenfertigungsmaschine gemäß Anspruch 2, die ferner einen Breitendetektor (51, 62) aufweist zum Abfühlen der Breite der von der Schereinrichtung (5) verteilten Asphaltschicht und zum Vorsehen eines Breitensignals (511), wobei die Steuereinheit (10) auf das Breitensignal (511) ansprechend ist, so dass die sich ergebende Information das Gewicht des auf einer Fläche eines vorbestimmten Abschnitts der Fahrbahndecke verteilten Asphalts ist.

4. Straßendeckenfertigungsmaschine gemäß einem der vorhergehenden Ansprüche, die ferner einen Neigungsdetektor (95) aufweist zum Abfühlen einer Neigung der Maschine im Vergleich zur Vertikalen und zum Erzeugen eines Neigungssignals (951 ), wobei die Steuereinheit (10) auf das Neigungssignal (951) ansprechend ist zum Korrigieren des detektierten Gewichts, wenn die Straßendeckenfertigungsmaschine auf nicht-planaren Strecken arbeitet.

5. Straßendeckenfertigungsmaschine gemäß Anspruch 1, wobei die Wiegeeinrichtung (9) eine Lade- bzw. Belastungszelle aufweist.

6. Straßendeckenfertigungsmaschine gemäß Anspruch 1, die ferner eine Dichtung (83) aufweist, welche zwischen der Hinterkante der Wiegeplatte (81) und der Vorderkante der benachbarten festen Platte (8) angeordnet ist, wobei die Dichtung im wesentlichen T-förmig ist mit zwei entgegengesetzten Flügeln (84, 85) und einem mittig angeordneten, herunterhängenden Teil, wobei die Flügel abgeschrägt sind und auf der Oberfläche der Wiegeplatte (81) bzw. der benachbarten festen Platte (8) angeordnet sind, und wobei der mittige, herunterhängende Teil (6) davon in die im wesentlichen vertikale Wand zwischen der Wiegeplatte (81 ) und der benachbarten festen Platte (8) eingesetzt ist.

7. Verfahren zum Steuern einer Straßendeckenfertigungsmaschine zum Tragen von Asphaltmaterial und zum Fertigen von Asphaltoberflächen auf dem Untergrund, wobei die Maschine folgendes aufweist: einen Schüttgutbehälter (2) zur Speicherung und Verteilung des Materials; eine Fördereinrichtung (6) zum Befördern des Materials aus dem Schüttgutbehälter (2); einen Verteilungsschneckenförderer (4), der Material von der Fördereinrichtung erhält und das Material auf dem Untergrund ablagert; eine Schereinrichtung (5), die benachbart zu dem Schneckenförderer angeordnet ist zum Komprimieren des auf dem Untergrund abgelagerten Materials; und eine Steuereinheit (10);
wobei die Fördereinrichtung (6) eine Rolle bzw. Scheibe (62) aufweist, um eine Kette (63) der Fördereinrichtung anzutreiben, wobei die Kette (63) mit Querrippen (64) verbunden ist, welche geeignet sind zum Transportieren des Materials, und wobei die Fördereinrichtung (6) ferner eine Wiegeplatte (81) aufweist,
wobei das Verfahren der folgenden Schritte aufweist:
Abfühlen der Geschwindigkeit bzw. Drehzahl der Rolle bzw. Scheibe (62) und Vorsehen eines Signals als Anzeige dafür an die Steuereinheit (10); Bestimmen von Zeitintervallen, die eine Funktion der Geschwindigkeit der Rolle bzw. Scheibe (62) sind, so daß während jedes Zeitintervalls die Rolle bzw. Scheibe (62) eine Länge der Kette (63) ähnlich der Länge der Wiegeplatte (81) weggetragen hat; und
Wiegen des Materials auf der Wiegeplatte (81) in den Zeitintervallen unter der Steuerung der Steuereinheit (10), um das Gewicht des von der Maschine während des Betriebs verteilten Materials zu bestimmen.

8. Verfahren gemäß Anspruch 7, das ferner die folgenden Schritte aufweist:
Aufzeichnen des Gewichts als eine Funktion der Geschwindigkeit der Fördereinrichtung des Materials, Vorsehen von Information bezüglich der Fortbewegungsgeschwindigkeit der Maschine, und Verarbeiten der Information bezüglich des Legens des Asphalts entsprechend einer bestimmten Route der Maschine.

9. Verfahren gemäß Anspruch 8, das ferner die folgenden Schritte aufweist:
Vorsehen von Information über die Breite der Asphaltlegefront, und
Vorsehen von Information bezüglich der Dicke des auf einer vorbestimmten Fläche gelegten Asphalts.

10. Verfahren nach einem der Ansprüche 7 bis 9, das ferner die folgenden Schritte aufweist:
Abfühlen einer Neigung der Maschine im Vergleich zur Vertikalen, Erzeugen eines Neigungssignals (951), und Korrigieren des detektierten Gewichts entsprechend dem Neigungssignal (951), wenn die Straßendeckenfertigungsmaschine auf nicht-planaren Strecken arbeitet.

## Revendications

1. Machine finisseuse (1) pour transporter de l'asphalte et déposer des surfaces d'asphalte sur le sol, comprenant :
- un châssis,
- une trémie (2) fixée au châssis pour le stockage et distribution du matériau,
- un convoyeur (6) fixé au châssis pour transporter le matériau à partir de la trémie,
- une vis de distribution (4) disposée au niveau d'une extrémité de sortie du convoyeur pour recevoir le matériau de la sortie du convoyeur et déposer le matériau sur le sol,
- un dispositif de cisaillement (5) disposé au voisinage de la vis pour comprimer le matériau déposé contre le sol,
le convoyeur (6) comprenant :
deux chaînes sans fin (63) ;
des poulies (61, 62) portant les chaînes ;
des languettes transversales (64) reliant les chaînes pour transporter le matériau (7) à partir de la trémie ;
plusieurs plaques fixes (8) ancrées dans le châssis entre les chaînes pour porter le matériau ;
**caractérisée en ce que** la machine comprend :
une plaque de pesée (81) portant le matériau convoyé avant qu'il ne soit transféré sur la vis de distribution, la plaque de pesée (81) étant flottante par rapport à une plaque fixe précédente (8) et étant portée sur un dispositif de pesée (9) pour fournir un signal de pesée (91) indicatif du poids du matériau (9) ; et
un module de commande (10) agissant en réponse au signal de poids (91) pour produire une indication de la quantité de matériau déposée sur le sol à des intervalles temporels qui sont fonction de la vitesse angulaire (92) des poulies (62) du convoyeur de sorte que des pesées successives peuvent prendre place après que tout le matériau précédemment pesé a été déchargé à partir de la plaque de pesée (81).

2. Machine selon la revendication 1, comprenant en outre un capteur de vitesse (31) pour détecter la vitesse de translation de la machine finisseuse, le module de commande (10) agissant en réponse à un signal de vitesse (311) de sorte que l'information résultante est le poids de l'asphalte distribué par la machine le long d'une bande de route couverte.

3. Machine finisseuse selon la revendication 2, comprenant en outre un détecteur de largeur (51, 52) pour détecter la largeur de la couche d'asphalte distribuée par le dispositif de cisaillement (5) et fournissant un signal de largeur (511), le module de commande (10) agissant en réponse au signal de largeur (511) de sorte que l'information résultante est le poids de l'asphalte distribué sur une surface d'une bande prédéterminée de route.

4. Machine finisseuse selon l'une quelconque des revendications précédentes, comprenant en outre un détecteur d'inclinaison (95) pour détecter l'inclinaison de la machine par rapport à la verticale et pour produire un signal d'inclinaison (951), le module de commande (10) étant sensible au signal d'inclinaison (951) pour corriger le poids détecté quand la machine finisseuse travaille sur des routes non planes.

5. Machine finisseuse selon la revendication 1, dans laquelle le dispositif de pesée (9) comprend une cellule de chargement.

6. Machine finisseuse selon la revendication 1, comprenant en outre un joint (83) disposé entre le bord arrière de la plaque de pesée (81) et le bord avant de la plaque fixe adjacente (8), le joint étant sensiblement en forme de T avec deux ailes opposées l'une à l'autre (84, 85) et une partie en extension disposée de façon centrale, les ailes étant biseautées et disposées sur la surface de la plaque de pesée (81) et la plaque fixe adjacente (8) respectivement, et leur partie en extension centrale (6) étant insérée dans une paroi sensiblement verticale entre la plaque de pesée (81) et la plaque fixe adjacente (8).

7. Procédé de commande d'une machine finisseuse pour transporter de l'asphalte et déposer des surfaces d'asphalte sur le sol, la machine comprenant une trémie (2) pour le stockage et la distribution du matériau, un convoyeur (6) pour transporter le matériau à partir de la trémie (2), une vis de distribution (4) recevant le matériau du convoyeur et déposant le matériau sur le sol, un dispositif de cisaillement (5) disposé de façon adjacente à la vis pour comprimer le matériau déposé contre le sol, et un module de commande (10) ;
le convoyeur (6) comprenant une poulie (62) pour entraîner une chaîne (63) du convoyeur, la chaîne (63) étant reliée à des languettes transversales (64) adaptées à transporter le matériau, et une plaque de pesée (81) ;
le procédé comprenant les étapes suivantes :
détecter la vitesse de la poulie (62) et fournir un signal indicatif de celle-ci au module de commande (10) ;
déterminer des intervalles temporels qui sont fonction de la vitesse de la poulie (62) de sorte que, pendant chaque intervalle de temps, la poulie (62) a transporté la longueur d'une chaîne (63) similaire à la longueur de la plaque de pesée (81) ; et peser le matériau sur la plaque de pesée (81) dans des intervalles temporels sous la commande du module de commande (10) pour déterminer le poids du matériau distribué par la machine pendant son action.

8. Procédé selon la revendication 7, comprenant en outre les étapes suivantes :
enregistrer le poids en fonction de la vitesse du convoyeur du matériau ;
fournir une information ayant trait à la vitesse d'avancement de la machine, et
élaborer l'information ayant trait au dépôt d'asphalte en fonction du trajet de la machine.

9. Procédé selon la revendication 8, comprenant en outre les étapes consistant à :
fournir une information sur la largeur du dépôt d'asphalte, et
fournir une information sur l'épaisseur de l'asphalte déposé sur une surface prédéterminée.

10. Procédé selon l'une quelconque des revendications 7 à 9, comprenant en outre des étapes suivantes :
détecter l'inclinaison de la machine par rapport à la verticale,
produire un signal d'inclinaison (951), et
corriger le poids détecté en fonction du signal d'inclinaison (951) quand la machine finisseuse fonctionne sur des routes non planes.
